(19) Europäisches Patentamt / European Patent Office / Office européen des brevets

(11) **EP 3 114 007 B1**

(12) **FASCICULE DE BREVET EUROPEEN**

(45) Date de publication et mention
de la délivrance du brevet:
**18.03.2020 Bulletin 2020/12**

(21) Numéro de dépôt: **15713207.7**

(22) Date de dépôt: **27.02.2015**

(51) Int Cl.:
***B62D 5/04*** *(2006.01)*

(86) Numéro de dépôt international:
**PCT/FR2015/050473**

(87) Numéro de publication internationale:
**WO 2015/132509 (11.09.2015 Gazette 2015/36)**

(54) **PROCÉDÉ DE DÉTECTION D'UNE INVERSION DE BRAQUAGE PAR SURVEILLANCE DU COUPLE FOURNI PAR UN MOTEUR D'ASSISTANCE DE DIRECTION ET APPLICATION DUDIT PROCÉDÉ A L'ÉVALUATION DU FROTTEMENT**

VERFAHREN ZUR ERKENNUNG EINER FAHRTRICHTUNGSUMKEHRUNG DURCH ÜBERWACHUNG DES VON EINEM SERVOLENKUNGSMOTOR ZUGEFÜHRTEN DREHMOMENTS, ANWENDUNG DES BESAGTEN VERFAHRENS ZUR REIBUNGSBEURTEILUNG

METHOD FOR DETECTING A REVERSAL IN THE STEERING DIRECTION BY MONITORING THE TORQUE SUPPLIED BY A POWER STEERING MOTOR, AN APPLICATION OF SAID METHOD TO FRICTION EVALUATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.03.2014 FR 1451682**

(43) Date de publication de la demande:
**11.01.2017 Bulletin 2017/02**

(73) Titulaire: **JTEKT Europe**
**69540 Irigny (FR)**

(72) Inventeurs:
• **BOURDREZ, Sébastien**
  **F-69510 Yzeron (FR)**
• **MOULAIRE, Pascal**
  **F-69890 La Tour de Salvagny (FR)**
• **RAVIER, Christophe**
  **F-69780 Saint Pierre de Chandieu (FR)**

(74) Mandataire: **Chevalier, Renaud Philippe et al**
**Cabinet Germain & Maureau**
**BP 6153**
**69466 Lyon Cedex 06 (FR)**

(56) Documents cités:
**EP-A1- 2 426 030       EP-A2- 2 279 927**
**WO-A1-2012/035418    DE-A1- 19 920 975**
**JP-A- H0 939 809        US-A1- 2011 098 887**
**US-A1- 2012 259 512**

**Description**

La présente invention concerne le domaine général des procédés de gestion de directions assistées équipant des véhicules, et notamment des véhicules automobiles.

Elle concerne plus particulièrement la prise en considération des efforts de frottements dans un mécanisme de direction assistée.

Dans certains procédés de gestion de direction assistée, et plus globalement dans certains procédés de contrôle de la trajectoire d'un véhicule, il peut être utile, voire indispensable, de détecter une inversion de braquage, c'est-à-dire un changement du sens de rotation du volant de conduite sous l'action du conducteur du véhicule.

A cet effet, on peut notamment surveiller la vitesse de rotation angulaire du volant de conduite, afin de détecter un changement de signe de ladite vitesse de rotation.

Toutefois, pour permettre une détection suffisamment fiable d'une inversion de braquage par un tel procédé, et plus particulièrement pour éviter la génération de « faux positifs » provoqués par exemple par de légères oscillations du volant de conduite, il est nécessaire de s'assurer que l'amplitude des déplacements angulaires effectués par ledit volant de conduite, dans chacun des deux sens de rotation opposés qui bordent le point d'inversion de braquage, est supérieure à des seuils de détection prédéterminés, relativement élevés.

Or, le temps qui est nécessaire au volant pour atteindre et franchir de tels seuils de détection peut être relativement long, ce qui tend à limiter la précision et la réactivité du procédé de détection des inversions de braquage.

En outre, la nécessité de connaître la vitesse angulaire du volant de conduite, par exemple à partir d'une mesure de la position angulaire dudit volant de conduite, peut, dans certaines situations, imposer l'ajout d'un capteur dédié, ce qui augmente l'encombrement, le poids et le coût de fabrication du système de direction.

Les objets assignés à l'invention visent par conséquent à remédier aux inconvénients susmentionnés et à proposer un nouveau procédé de gestion de direction assistée, à la fois simple et peu onéreux à mettre en œuvre, qui permette une détection rapide et fiable d'une inversion de braquage.

Les objets assignés à l'invention sont atteints au moyen d'un procédé de gestion d'une direction assistée, ladite direction assistée comprenant au moins un moteur d'assistance destiné à délivrer un effort d'assistance, ledit procédé étant caractérisé en ce qu'il comprend une étape (a) de détection d'inversion de braquage au cours de laquelle on acquiert un signal, dit « signal de couple moteur », qui est représentatif de l'effort d'assistance délivré par le moteur d'assistance, puis l'on évalue la dérivée temporelle dudit signal de couple moteur, puis l'on compare ladite dérivée temporelle du signal de couple moteur à un seuil de variation prédéterminé afin de détecter un pic de dérivée, supérieur audit seuil de variation prédéterminé, qui signale une inversion du sens de braquage de la direction.

Avantageusement, la surveillance d'un signal représentatif de l'effort d'assistance fourni par le moteur d'assistance, par exemple d'un signal qui correspond à la consigne de couple appliquée audit moteur d'assistance ou à la mesure effective du couple qu'exerce l'arbre dudit moteur d'assistance sur le mécanisme de direction, et plus particulièrement la surveillance de la valeur instantanée prise par la dérivée temporelle d'un tel signal, permet de détecter rapidement et de façon fiable toute inversion de braquage, indépendamment de l'utilisation de seuils de détection contraignants, relatifs à l'amplitude du déplacement angulaire volant de conduite.

Les inventeurs ont en effet constaté que, lors d'une inversion de braquage, c'est-à-dire lorsque le conducteur donne successivement un coup de volant à gauche puis un coup de volant à droite (ou inversement), on observe une chute (en valeur absolue) très rapide, quasi-instantanée, de l'effort (du couple) d'assistance délivré par le moteur d'assistance, chute qui se traduit par un pic de la dérivée temporelle du signal représentatif dudit effort (couple) d'assistance.

Cette variation soudaine et de forte amplitude de l'effort d'assistance résulte du fait que, lorsque le système de direction, et plus particulièrement le moteur d'assistance, opère, au niveau d'un extrémum (local) de déplacement des organes de direction (c'est-à-dire lors du passage par une inversion de braquage), une transition d'un premier état d'assistance dans lequel le moteur assiste la manœuvre de braquage dans un premier sens (par exemple vers la gauche) vers un second état d'assistance dans lequel le moteur assiste la manœuvre de braquage dans un second sens opposé (vers la droite, dans l'exemple susmentionné), on observe, nécessairement, un basculement (une inversion) du sens de déplacement des organes de direction.

Or, en pratique, les efforts résistants dus aux frottements internes au mécanisme de direction, qui tendent à s'opposer à la manœuvre de braquage, sont de signe opposé au signe du déplacement (et plus particulièrement au signe de la vitesse de déplacement) des organes de direction.

L'effort d'assistance possède quant à lui *in fine* une fonction motrice, c'est-à-dire qu'il tend à entraîner en déplacement les organes de direction dans le sens de braquage considéré, voulu par le conducteur, à l'encontre des efforts résistants, parmi lesquels les efforts dus aux frottements internes.

En tout état de cause, le basculement du sens de manœuvre de braquage de la direction, et donc le basculement du sens de déplacement des organes de direction, provoque quasi-simultanément d'une part la disparition d'une première composante d'effort résistant, attribuable aux frottements qui s'opposaient, avant l'inversion de braquage, au déplacement des organes de direction dans le premier sens (par convention vers la gauche), et d'autre part l'apparition d'une nouvelle (seconde) composante d'effort résistant, également attribuable aux frottements, mais de signe opposé à la première composante d'effort résistant, et qui s'oppose cette fois, après l'inversion de braquage, au déplacement des organes de direction dans le second sens (vers la droite) opposé au premier sens.

La présence de frottements, et plus particulièrement l'inversion du sens d'action des frottements lors de l'inversion du sens de braquage, est à l'origine d'un phénomène d'hystérésis qui se traduit, lors de l'inversion du sens de braquage, par une chute (en valeur absolue) de l'effort résistant, et par conséquent par une chute de l'effort d'assistance qui est délivré par le moteur d'assistance pour contrer (et surmonter) ledit effort résistant.

En pratique, ladite chute correspond plus précisément au cumul (algébrique, en tenant compte de leurs signes opposés) de la première composante d'effort résistant (première composante d'effort de frottement) et de la seconde composante d'effort résistant (seconde composante d'effort de frottement) susmentionnées.

Le calcul de la dérivée temporelle du signal de couple moteur permet ainsi avantageusement de mettre en évidence toute chute rapide dudit signal de couple moteur imputable à une inversion de braquage, et, par conséquent, de détecter ladite inversion de braquage.

On notera par ailleurs avantageusement que la surveillance de la dérivée temporelle du signal de couple moteur, outre qu'elle procure une détection rapide des inversions de braquage, facilite, tel que cela sera détaillé ci-après, les opérations de filtrage permettant d'éliminer les risques de faux positifs dus au bruit affectant la qualité du signal de couple moteur.

Enfin, le signal de couple moteur constitue avantageusement un signal qui est systématiquement disponible et aisément exploitable au sein de tous les systèmes de direction assistée, par exemple sous la forme de la consigne qui est élaborée par les lois d'assistance et appliquée au moteur d'assistance, ce qui simplifie la mise en œuvre de l'invention.

D'autres objets, caractéristiques et avantages de l'invention apparaîtront plus en détail à la lecture de la description qui suit, ainsi qu'à l'aide des dessins annexés, fournis à titre purement illustratif et non limitatifs, parmi lesquels :

    La figure 1 illustre, sur un diagramme temporel, l'évolution de la position angulaire du volant de conduite (ou, de manière équivalente, en tenant compte du rapport de réduction du mécanisme d'entraînement, l'évolution de la position angulaire de l'arbre du moteur d'assistance) ainsi que l'évolution du signal de couple moteur lors d'inversions de braquage successives.

    La figure 2 illustre, sur un diagramme temporel, les valeurs prises par la dérivée temporelle du signal de couple moteur de la figure 1.

    La figure 3 illustre, selon un diagramme temporel, un agrandissement de la courbe représentant le signal de couple de la figure 1, au moment de la chute de couple (en valeur absolue) provoquée par une inversion de braquage.

    La figure 4 illustre, selon un schéma-bloc, le fonctionnement d'un procédé conforme à l'invention.

L'invention concerne un procédé de gestion d'une direction assistée 1.

Ladite direction assistée 1 comprend au moins un moteur d'assistance 2 destiné à délivrer un effort d'assistance $C_{assist}$.

On peut indifféremment envisager tout type de moteur d'assistance 2, et plus particulièrement tout type de moteur d'assistance à double sens de fonctionnement.

En particulier, l'invention peut tout aussi bien s'appliquer à un moteur d'assistance 2 rotatif, destiné à exercer un effort d'assistance $C_{assist}$ de type couple, qu'à un moteur d'assistance 2 linéaire, destiné à exercer un effort d'assistance $C_{assist}$ de type traction ou compression.

Par ailleurs, ledit moteur d'assistance 2 peut être par exemple hydraulique, ou bien, de préférence, électrique (l'utilisation d'un moteur électrique facilitant notamment l'implantation et la mise en œuvre dudit moteur, ainsi que la génération et la gestion des signaux utiles).

De façon particulièrement préférentielle, le moteur d'assistance 2 sera un moteur électrique de type rotatif, par exemple de type « brushless ».

Par ailleurs, la direction assistée 1 comprend de préférence, de manière connue en soi (mais non représentée), un volant de conduite par lequel le conducteur du véhicule peut entraîner en rotation une colonne de direction qui engrène, au moyen d'un pignon, sur une crémaillère de direction montée coulissante dans un carter de direction solidaire du châssis du véhicule.

Les extrémités de la crémaillère de direction sont de préférence reliées chacune à un porte-fusée orientable en lacet, sur lequel est monté une roue directrice (et préférentiellement motrice) du véhicule, de telle manière que le déplacement de la crémaillère en translation dans le carter provoque une modification de l'angle de braquage (i.e. de l'orientation en lacet) desdites roues directrices.

Le moteur d'assistance 2 peut venir en prise sur la colonne de direction, par exemple par l'intermédiaire d'un réducteur à roue tangente et vis sans fin, ou bien encore venir en prise directement sur la crémaillère de direction, par un mécanisme d'entraînement de type vis à billes ou bien *via* un pignon moteur distinct du pignon de la colonne de direction (pour former alors un mécanisme de direction dit « à double pignon »).

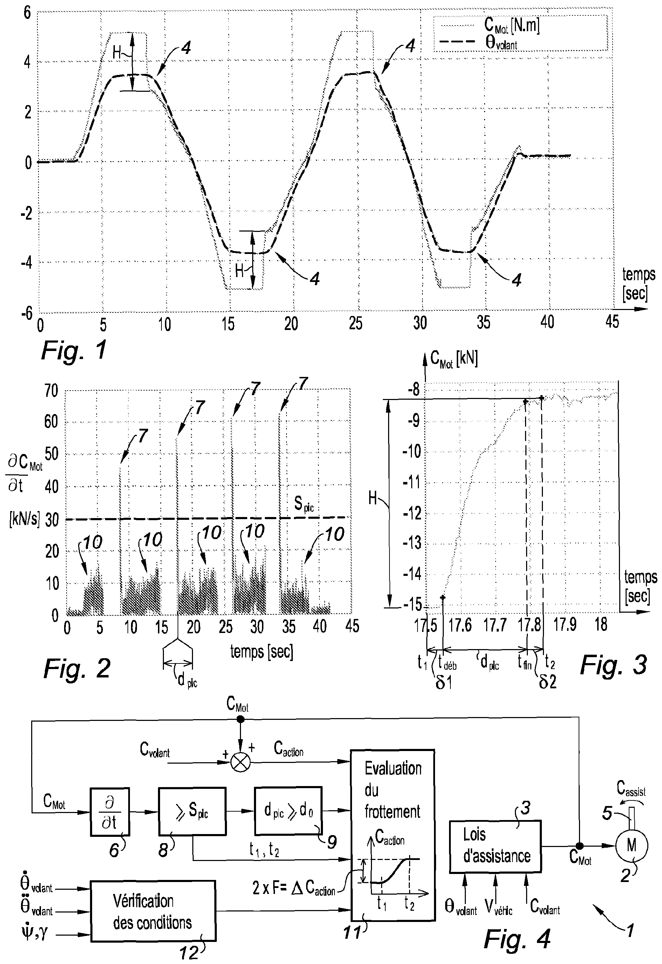

Tel que cela est illustré sur la figure 4, la consigne d'effort (ou, plus préférentiellement, la consigne de couple) $C_{Mot}$ qui est appliquée au moteur d'assistance 2 afin que ledit moteur assiste le conducteur dans la manœuvre de la direction 1 dépend de lois d'assistance prédéterminées, stockées dans une mémoire non volatile d'un calculateur (ici un module d'application de lois d'assistance 3), et qui peuvent ajuster ladite consigne d'effort $C_{Mot}$ en fonction de divers paramètres tels que le couple volant $C_{volant}$ exercé par le conducteur sur le volant de conduite, la vitesse (longitudinale) $V_{véhic}$ du véhicule, la position angulaire $\theta_{volant}$ du volant de conduite, etc.

Selon l'invention le procédé comprend une étape (a) de détection d'inversion de braquage.

Cette étape (a) de détection d'inversion de braquage permet de détecter une inversion de braquage 4, c'est-à-dire un changement du sens dans lequel le conducteur du véhicule actionne (volontairement) le volant de conduite, ce changement ayant pour but et pour effet de passer d'une situation de braquage vers la gauche, dans laquelle le conducteur exerce une force qui tire le volant vers la gauche, à une situation de braquage vers la droite, dans laquelle le conducteur exerce une force qui tire le volant vers la droite, ou inversement.

De telles inversions de braquage 4 successives sont bien visibles sur la figure 1, sur laquelle la courbe en trait pointillé illustre l'évolution dans le temps de la position angulaire $\theta_{volant}$ du volant de conduite, faisant ainsi apparaître les alternances du sens de rotation dudit volant, lorsque le conducteur braque successivement le volant à droite, puis à gauche, puis de nouveau à droite, etc. (ce qui explique que la courbe représentative de la position angulaire du volant présente ici une forme proche d'une sinusoïde).

On notera que, dans l'exemple préférentiel de la figure 1, la position angulaire $\theta_{volant}$ du volant de conduite, représentative de la configuration de braquage de la direction, est en fait exprimée, de manière équivalente, à partir de la position angulaire de l'arbre 5 du moteur d'assistance 2.

En effet, toute mesure de position représentative de la configuration spatiale de braquage de la direction, et donc de la position angulaire du volant de conduite, peut convenir aux fins d'illustration et de mise en œuvre de l'invention.

En l'espèce, le rapport de réduction mécanique de la chaîne cinématique qui lie l'arbre 5 du moteur d'assistance au volant de conduite établit une relation entre les positions angulaires de l'arbre du moteur et du volant.

Dans l'exemple de la figure 1, le rapport de réduction étant de l'ordre de 26, et l'échelle d'angle portée en ordonnées correspondant à des kilo-degrés ($10^3$ degrés) mécaniques d'arbre moteur, les va-et-vient de l'arbre moteur alternent entre -3600 degrés (d'angle d'arbre moteur) et +3600 degrés (d'angle d'arbre moteur) environ, ce qui correspond à des déplacements angulaires du volant de conduite de +/- 139 degrés environ.

On notera par ailleurs que, de manière connue en soi, l'information de position angulaire de l'arbre 5 du moteur d'assistance 2 peut être fournie par un capteur de position relative, de type « resolver », ici avantageusement intégré de série au moteur d'assistance 2.

Ce choix de mesure de la position angulaire, choix qui n'est nullement restrictif au regard du principe de l'invention, explique que l'on puisse également, le cas échéant, exprimer initialement ladite position angulaire dans une unité de type « degré électrique », qui tient compte du nombre de pôles statoriques du resolver, plutôt qu'en « degrés mécaniques ».

Selon l'invention, au cours de l'étape (a) de détection d'inversion de braquage, on acquiert un signal, dit « signal de couple moteur », qui est représentatif de l'effort d'assistance $C_{assist}$ délivré par le moteur d'assistance 2 (et plus particulièrement du couple, en l'espèce du couple électromagnétique, fourni par ledit moteur d'assistance).

De préférence, le signal de couple moteur utilisé pour l'étape (a) de détection d'inversion de braquage est constitué par la consigne d'effort ou de couple $C_{Mot}$ qui est appliquée au moteur d'assistance 2, ou bien encore par une valeur mesurée de l'effort ou du couple $C_{assist}$ qui est effectivement restitué par le moteur d'assistance 2.

En pratique, dans les situations de vie envisagées pour le véhicule, la valeur de la consigne $C_{Mot}$ appliquée au moteur d'assistance 2, et la valeur de l'effort d'assistance $C_{assist}$ qui est effectivement fourni par ledit moteur d'assistance 2, sont extrêmement proches, voire égales, de telle sorte que ces deux signaux peuvent être utilisés de manière équivalente dans le cadre de l'invention.

C'est pourquoi, de façon préférentielle, et par commodité de description, on pourra assimiler dans ce qui suit le signal de couple moteur à la consigne d'effort (consigne de couple) $C_{Mot}$ appliquée au moteur d'assistance 2.

Par ailleurs, on notera que les signaux de consigne d'effort $C_{Mot}$ et/ou de mesure de l'effort d'assistance $C_{assist}$ effectivement délivré par le moteur présentent l'avantage d'être disponibles et facilement exploitables au sein de la direction assistée.

En particulier, le signal de consigne d'effort $C_{Mot}$ destiné à être appliqué au moteur d'assistance est nécessairement connu en permanence, puisqu'il constitue systématiquement une donnée de sortie du module d'application des lois d'assistance 3 de la direction assistée.

L'exploitation de ce signal de consigne $C_{Mot}$ relève donc d'une mise en œuvre très simple.

L'information relative à la mesure de l'effort (ou du couple) d'assistance $C_{assist}$ effectivement délivré par le moteur d'assistance 2 peut quant à elle être renseignée, si nécessaire, par ledit moteur d'assistance 2 luimême (ou plus particulièrement par le contrôleur intégré audit moteur), si ledit moteur d'assistance est équipé en série d'un capteur d'effort, et plus particulièrement d'un capteur de couple électromagnétique idoine.

Ladite mesure de l'effort d'assistance $C_{assist}$

peut bien entendu, à titre alternatif, être obtenue par tout autre capteur d'effort (ou de couple) externe approprié, tel qu'un capteur de couple rapporté sur l'arbre 5 du moteur d'assistance 2.

Selon une variante possible de mise en œuvre du procédé, on pourra considérer comme « signal de couple moteur », représentatif de l'effort d'assistance $C_{assist}$ délivré par le moteur d'assistance 2, l'effort de traction ou de compression qui s'exerce sur la crémaillère de direction (longitudinalement, selon l'axe de translation de ladite crémaillère).

Un tel signal pourra par exemple être fourni par des jauges extensométriques mesurant les déformations de la crémaillère, ou par tout autre capteur d'effort approprié.

Globalement, pour la (simple) détection des inversions de braquage selon l'invention, on peut en effet exploiter, en tant que « signal de couple moteur », tout signal dont la valeur est sensible à une inversion des frottements, c'est-à-dire tout signal dont la valeur est affectée par tout ou partie des frottements (internes) qui s'exercent sur la direction de telle manière que ledit signal subit une variation (ici une chute) perceptible lors de l'inversion de braquage (et donc lors de l'inversion desdits frottements).

Par ailleurs, on notera que, en tenant compte du rapport d'entraînement entre le moteur d'assistance 2 et la crémaillère de direction, on peut indifféremment exprimer le signal de couple moteur $C_{Mot}$ sous forme d'un couple moteur ou bien sous forme d'un effort linéaire équivalent de crémaillère, sans modifier le principe général de l'invention.

Ainsi, à titre d'exemple, le signal de couple moteur $C_{Mot}$ de la figure 1, qui est homogène à un couple (exprimé en N.m) sur ladite figure 1, peut ainsi être également converti, par commodité et par simple convention de représentation, sous la forme d'un effort linéaire équivalent, exprimé en Newtons, et plus précisément en kilo-Newtons, tel que cela apparaît sur la figure 2 ou sur la figure 3.

Par ailleurs, bien qu'il ne soit pas exclu de travailler avec des signaux, et notamment un signal de couple moteur $C_{Mot}$ analogique, on utilisera de préférence un ou des signaux, et notamment un signal de couple moteur $C_{Mot}$, numériques.

Selon l'invention, après avoir acquis le signal de couple moteur $C_{Mot}$, on évalue ensuite la dérivée temporelle $\frac{\partial C_{Mot}}{\partial t}$ dudit signal de couple moteur (ici au moyen du module de dérivation 6, sur la figure 4).

En pratique, on peut appliquer à cet effet toute méthode de dérivation permettant de déterminer la variation du signal de couple moteur $C_{Mot}$ par unité de temps (c'est-à-dire la pente de la courbe représentative dudit signal), en l'espèce entre deux instants séparés par un intervalle de temps (période d'échantillonnage) prédéterminé suffisamment restreint.

A titre indicatif, ladite période d'échantillonnage (dite aussi « pas » d'échantillonnage) pourra être comprise entre 0,5 ms et 10 ms.

Après avoir évalué la dérivée temporelle du signal de couple moteur, on compare ensuite, ici au moyen d'un module de comparaison 8, ladite dérivée temporelle $\frac{\partial C_{Mot}}{\partial t}$ du signal de couple moteur à un seuil de variation $S_{pic}$ prédéterminé afin de détecter un pic de dérivée 7, qui soit supérieur audit seuil de variation prédéterminé, et qui signale une inversion du sens de braquage de la direction.

Tel que cela a été dit plus haut, et tel que cela est bien visible sur la figure 1, une inversion de braquage 4 se traduit, du fait de l'inversion concomitante des frottements, par une variation, en l'espèce une chute (un rapprochement de zéro), en valeur absolue, du signal de couple moteur $C_{Mot}$.

Ladite chute présente une hauteur $\underline{H}$ relativement importante (de l'ordre de 2,5 N.m de couple moteur dans l'exemple de la figure 1) et une durée relativement courte (typiquement inférieure à la demi-seconde, et par exemple comprise entre 100 ms et 300 ms).

Ladite chute se signale donc par un décrochement de forte pente du signal de couple moteur $C_{Mot}$, bien visible sur la figure 1, et se traduit ainsi par un accroissement important et soudain de la valeur de la dérivée temporelle du signal de couple moteur $\frac{\partial C_{Mot}}{\partial t}$, sous forme d'un pic de dérivée 7, tel que cela est illustré sur la figure 2.

Les inventeurs ont ainsi constaté que les inversions de braquage 4 sont signalées par des pics de dérivée 7, identifiables car de valeur supérieure à une valeur seuil de pente, dite « seuil de variation » $S_{pic}$, c'est-à-dire vérifiant : $\frac{\partial C_{Mot}}{\partial t} \geq S_{pic}$

Typiquement, notamment dans l'exemple considéré sur la figure 2, les pics 7 de la dérivée temporelle du signal de couple moteur (ou plus particulièrement, les pics de la dérivée temporelle de l'effort équivalent exercé sur la crémaillère) caractéristiques d'une inversion de braquage 4 étaient compris dans une plage dite « plage de pic » supérieure à 30 kN/s, et en l'espèce s'étendant de 30 kN/s à 65 kN/s, et plus particulièrement de 35 kN/s à 50 kN/s.

Le seuil de variation prédéterminé $S_{pic}$ peut alors être choisi comme inférieur ou égal à la plage de pic prévisible, et notamment être égal au ou proche du seuil inférieur de ladite plage. Par exemple, le seuil de variation $S_{pic}$ pourra être ici fixé à 30 kN/s.

Selon l'invention on réalise, au cours de l'étape (a) de détection d'inversion de braquage, en l'espèce en utilisant un module de filtrage 9 sur la figure 4, un filtrage sélectif de pic en chronométrant la durée $d_{pic}$, dite « durée de maintien de pic », pendant laquelle la dérivée temporelle du signal de couple moteur $\dfrac{\partial C_{Mot}}{\partial t}$ se maintient au-dessus du seuil de variation $S_{pic}$, après avoir franchi ledit seuil de variation $S_{pic}$, et en signalant une inversion de braquage 4 si la durée de maintien de pic $d_{pic}$ est supérieure ou égale à un seuil de durée minimale $d_0$ prédéterminé.

En d'autres termes, on conclut que l'on est en présence d'une inversion de braquage 4 si la dérivée temporelle du signal de couple moteur vérifie la double condition d'une part de franchissement d'un seuil de variation $S_{pic}$ (c'est-à-dire présente une valeur supérieure à une valeur de pente minimale, tel que décrit plus haut) et d'autre part de maintien au-dessus dudit seuil de variation $S_{pic}$ pendant une durée au moins égale au seuil de durée $d_0$ susmentionné.

Avantageusement, le filtrage constitue une précaution supplémentaire dans l'identification des inversions de braquage 4, dans la mesure où ledit filtrage permet d'opérer une distinction entre les pics de dérivée 7 qui correspondent véritablement à des inversions de braquage 4 et les pics de dérivée de bruit 10 (figure 2) qui sont provoqués par le bruit de fond qui perturbe le signal de couple moteur $C_{Mot}$.

En effet, le bruit créant des fluctuations aléatoires et rapides au sein du signal de couple moteur $C_{Mot}$, il n'est pas exclu que, ponctuellement, ledit bruit provoque dans ledit signal l'apparition d'une variation (pente) qui serait supérieure au seuil de variation $S_{pic}$, et qui pourrait être interprétée, à tort, sur la seule base du premier critère de détection par le calcul de la dérivée temporelle, comme une inversion de braquage.

Cependant, les inventeurs ont constaté que le bruit, phénomène à caractère sensiblement périodique, présentait une demi-période caractéristique qui est strictement inférieure à la durée de chute du signal de couple moteur.

La durée des pics de dérivée de bruit, provoqués par le bruit, étant sensiblement égale à la demi-période dudit bruit (demi-période pendant laquelle le bruit croît, ou au contraire décroît, de façon monotone, entre le minimum et le maximum de l'oscillation concernée ou inversement), il est donc possible d'isoler les pics de dérivée 7 pertinents, représentatifs d'une inversion effective de braquage, en excluant, selon un second critère complémentaire du premier critère, les pics de dérivée (de bruit 10) qui présentent une durée strictement inférieure à la durée caractéristique d'une telle inversion de braquage 4.

En l'espèce, on peut par exemple fixer le seuil de durée $d_0$ minimale à une valeur comprise entre 30 ms et 40 ms, qui correspond à la demi-période maximale typique du bruit observé (alors que la durée de chute provoquée par une inversion de braquage est égale ou supérieure à 100 ms).

Concrètement, le module de filtrage 9 pourra comporter une bascule de détection de pic, placée sous la double dépendance d'une part du module de comparaison 8, et d'autre part d'une horloge chronométrant la durée écoulée depuis que ledit module de comparaison 8 a détecté le franchissement du seuil de variation $S_{pic}$, de telle manière que ladite bascule renvoie un signal de détection (signal d'identification de pic) sitôt que sont réunies les deux conditions cumulatives pour confirmer que l'on est en présence d'un pic 7 d'inversion de braquage.

Par ailleurs, selon une possibilité préférentielle de mise en œuvre qui peut constituer une invention à part entière, indépendamment de la nature de l'étape (a) de détection d'inversion de braquage, le procédé selon l'invention peut comprendre une étape (b) d'évaluation de frottement au cours de laquelle on acquiert un signal $C_{action}$, dit « signal d'effort d'actionnement », qui est représentatif de l'effort (et plus particulièrement du couple) d'actionnement total exercé conjointement sur la direction assistée par le conducteur et par le moteur d'assistance, et l'on évalue, ici au moyen d'un module d'évaluation de frottement 11, l'effort de frottement F qui s'oppose aux mouvements de braquage de la direction assistée, à partir de la différence $\Delta C_{action}$ entre deux valeurs prises par ledit signal d'effort d'actionnement $C_{action}$ respectivement avant et après l'inversion de braquage 4.

En d'autres termes, le procédé comprend une étape (b) d'évaluation de frottement au cours de laquelle on évalue le frottement à partir de la chute $\Delta C_{action}$ du signal d'effort d'actionnement $C_{action}$ qui se produit lors de l'inversion de braquage détectée par l'étape (a).

En effet, et pour les mêmes raisons que celles détaillées plus haut pour expliquer la chute $\underline{H}$ du signal de couple moteur $C_{Mot}$ en cas d'inversion de braquage, une inversion de braquage 4 se traduit également, plus globalement, par une chute $\Delta C_{action}$ du signal d'effort d'actionnement $C_{action}$, due à l'inversion du signe des efforts de frottement.

Dans l'absolu, on pourrait d'ailleurs, de manière sensiblement équivalente, et sans dénaturer le principe de l'invention, évaluer les frottements F à partir du signal de couple moteur $C_{Mot}$ seul (tel qu'il est renseigné par la consigne appliquée au moteur, ou par le couple électromagnétique délivré par le moteur, tel que cela a été mentionné plus haut), et plus particulièrement à partir de la différence entre deux valeurs prises par ledit signal de couple moteur $C_{Mot}$ seul (plutôt que par le signal d'effort d'actionnement total $C_{action}$), respectivement avant et après l'inversion de braquage, c'est-à-dire à partir de la hauteur de chute $\underline{H}$ déjà mentionnée plus haut.

Toutefois, afin d'obtenir une évaluation plus précise et plus complète du phénomène de frottement qui affecte la direction, il est préférable d'utiliser, pour le calcul de la hauteur de chute, un signal qui englobe des effets de frottements sur une chaîne cinématique qui soit la plus longue et la plus complète possible, au sein de la direction, et ce afin de prendre en considération le plus grand nombre possible de tronçons de la direction dans lesquels des frottements peuvent prendre naissance, et donc de négliger le moins de sources de frottement interne possible.

En d'autres termes, il est préférable de recueillir des signaux d'efforts dans des zones situées le plus en amont possible de chaque chaîne cinématique comprise entre un élément actionneur amont de la direction d'une part (à savoir respectivement le conducteur et le moteur d'assistance), et les organes effecteurs aval (biellettes et roues directrices) d'autre part, afin que ces signaux englobent le maximum de frottements qui s'opposent à la manœuvre de la direction, et en l'occurrence englobent l'ensemble des frottements qui prennent naissance dans toute la chaîne cinématique située en aval du ou des actionneurs concernés.

En outre, il est également préférable de prendre en considération un signal d'effort d'actionnement total, qui tient compte non seulement de la contribution du moteur d'assistance 2, mais également de la contribution manuelle du conducteur.

En effet, la chute (en valeur absolue) d'un tel signal d'effort d'actionnement est ainsi représentative des frottements qui affectent le mécanisme de direction aussi bien dans sa portion "motorisée" (moteur d'assistance, réducteur, crémaillère...) que dans (tout ou partie de) sa portion "manuelle", dite aussi portion "conducteur" (volant de conduite, colonne de direction, liaison pignon/crémaillère...)

Pour ces raisons, le signal d'effort d'actionnement $C_{action}$ est de préférence formé, tel que cela est illustré sur la figure 4, par la somme d'une part d'un signal de couple volant représentatif du couple volant $C_{volant}$ exercé par le conducteur sur le volant de conduite, et d'autre part du signal de couple moteur $C_{Mot}$.

Avantageusement, on notera que les signaux de couple volant $C_{volant}$ et de couple moteur $C_{Mot}$ sont déjà disponibles à tout instant au sein de la plupart des directions assistées, et sont de ce fait aisément exploitables, ce qui simplifie la mise en œuvre de l'invention.

Le signal de couple volant $C_{volant}$ pourra par exemple correspondre à une mesure du couple volant $C_{volant}$ obtenue par un capteur de couple volant approprié, tel qu'un capteur magnétique de couple mesurant les déformations élastiques d'une barre de torsion placée entre le volant de conduite et la colonne de direction.

Un tel signal de couple volant $C_{volant}$ permettra avantageusement de prendre en considération tous les frottements apparaissant en aval de ladite barre de torsion, et notamment les frottements qui naissent dans la liaison entre le pignon fixé au tronçon inférieur de la colonne de direction et la crémaillère.

Le signal de couple moteur $C_{Mot}$ adapté à cette application pourra quant à lui être obtenu partout moyen approprié décrit plus haut.

A ce titre, on remarquera que, lorsque le signal de couple moteur $C_{Mot}$ est destiné à quantifier la hauteur de chute (lors de l'étape (b) d'évaluation de frottement), et non plus seulement à détecter les inversions de braquage (lors de l'étape (a) de détection), et ce, que ledit signal de couple moteur $C_{Mot}$ soit utilisé seul ou bien en combinaison avec le signal de couple volant pour former le signal total d'effort d'actionnement $C_{action}$, ledit signal de couple moteur $C_{Mot}$ sera de préférence recueilli le plus en amont possible par rapport au moteur d'assistance 2, et sera donc de préférence constitué par la consigne appliquée audit moteur d'assistance, ou par la mesure du couple électromagnétique qui est délivré par ledit moteur d'assistance, tel que cela a été dit plus haut.

Par ailleurs, quel que soit le signal utilisé pour quantifier les frottements (signal de couple moteur $C_{Mot}$, ou, préférentiellement, signal d'actionnement $C_{action}$), l'évaluation du frottement nécessite d'extraire dudit signal les valeurs prises par ledit signal immédiatement avant et immédiatement après l'inversion de braquage, c'est-à-dire, plus particulièrement, immédiatement avant et immédiatement après le pic de dérivée 7, et ce afin de pouvoir calculer ensuite la différence (hauteur de chute) entre lesdites deux valeurs.

C'est pourquoi le procédé conforme à l'invention utilisera de préférence une base de données permettant de stocker dans une mémoire l'historique des différentes valeurs successivement prises par le signal qui est utilisé pour quantifier les frottements (signal de couple moteur $C_{Mot}$, ou, préférentiellement, signal d'actionnement $C_{action}$), sur une période d'enregistrement qui sera choisie supérieure à la durée prévisible des chutes liées aux inversions de braquage 4.

Ainsi, on pourra, après qu'un pic de dérivée 7 aura été identifié, remonter dans le passé du signal pour connaître sa valeur à un instant qui précède la survenance dudit pic de dérivée.

Avantageusement, afin de ne pas consommer inutilement de l'espace mémoire, la base de données sera constamment rafraîchie, sur une période d'enregistrement glissante, de sorte à ne conserver, à un instant considéré, que les informations qui peuvent être effectivement utiles pour calculer le frottement audit instant considéré.

A titre indicatif, la période d'enregistrement pourra être comprise entre 0,5 s (500 ms) et 1 s, et de préférence égale à 500 ms.

De préférence, au cours de l'étape (b) d'évaluation de frottement, et tel que cela est illustré sur les figures 3 et 4, on identifie un instant de début de pic $t_{déb}$, qui correspond à l'instant auquel la dérivée

$$\frac{\partial C_{Mot}}{\partial t}$$

temporelle du signal de couple moteur passe au-dessus du seuil de variation $S_{pic}$, on identifie un instant de fin de pic $t_{fin}$, qui correspond à l'instant auquel la dérivée temporelle du signal de couple moteur

$$\frac{\partial C_{Mot}}{\partial t}$$

redescend en-dessous dudit seuil de variation $S_{pic}$, puis on détermine quelle était la valeur $C_{action}(t1)$,

dite « valeur d'effort d'actionnement antérieure à l'inversion de braquage », prise par le signal d'effort d'actionnement à un premier instant de référence t1 qui est égal ou antérieur à l'instant de début de pic $t_{déb}$, on détermine quelle était la valeur $C_{action}(t2)$, dite « valeur d'effort d'actionnement postérieure à l'inversion de braquage », prise par le signal d'effort d'actionnement à un second instant de référence t2 qui est égal ou postérieur à l'instant de fin de pic $t_{fin}$, puis on évalue le frottement à partir du calcul de la différence entre la valeur d'effort d'actionnement postérieure à l'inversion de braquage $C_{action}(t2)$ et la valeur d'effort d'actionnement antérieure à l'inversion de braquage $C_{action}(t1)$, c'est-à-dire :

$$\Delta C_{action} = |C_{action}(t2) - C_{action}(t1)|.$$

Plus particulièrement, on pourra considérer que la valeur des efforts de frottement F qui affectent la manœuvre de la direction à l'instant considéré (c'est-à-dire au moment de l'inversion de braquage 4 considérée) est égale, eu égard au phénomène d'hystérésis évoqué plus haut, à la demi-différence entre la valeur d'effort d'actionnement postérieure à l'inversion de braquage et la valeur d'effort d'actionnement antérieure à l'inversion de braquage, c'est-à-dire : F = $\Delta C_{action}$ / 2.

Avantageusement, l'utilisation d'une dérivée temporelle du signal de couple moteur $C_{Mot}$ ainsi que d'une référence temporelle aux instants de début $t_{déb}$ et de fin $t_{fin}$ de pic de dérivée 7 qui sont identifiés à partir de ladite dérivée permet de détecter précisément le moment où se produit l'inversion de braquage 4, et donc d'améliorer la fiabilité et la précision de l'évaluation des caractéristiques de la chute du signal d'effort d'actionnement.

En mesurant l'effort d'actionnement à des instants de référence t1, t2 qui sont calculés à partir des instants de début et de fin de pic et qui encadrent au plus près l'inversion réelle de braquage 4 (et donc la chute du signal d'effort d'actionnement), l'invention permet de déterminer précisément quelle était la valeur exacte de l'effort d'actionnement $C_{action}$ juste avant et juste après ladite inversion de braquage.

On évite ainsi tout retard ou approximation dans la mesure, qui pourrait sinon conduire à considérer une valeur du signal d'actionnement non représentative de la hauteur véritable de chute, car mesurée en un point de mesure temporellement trop éloigné de ladite chute.

L'invention permet ainsi d'évaluer le frottement F de façon réactive et fiable, car elle réduit considérablement les sources d'erreurs, et les lenteurs, qui entachaient jusqu'à présent les procédés d'estimation de frottement basés sur une surveillance de la position angulaire du volant de conduite.

Selon une possibilité de mise en œuvre, on pourra choisir, arbitrairement, de faire coïncider le premier instant de référence t1 avec l'instant de début de pic $t_{déb}$ (c'est-à-dire poser t1 = $t_{déb}$), et/ou, en complément ou alternativement, choisir de faire coïncider le second instant de référence t2 avec l'instant de fin de pic $t_{fin}$ (c'est-à-dire poser t2 = $t_{fin}$).

Toutefois, selon une seconde possibilité, le premier instant de référence t1 est de préférence choisi strictement antérieur à l'instant de début de pic $t_{déb}$ (t1 < $t_{déb}$), ledit premier instant de référence précédant ledit instant de début de pic d'une valeur d'avance 61 (c'est-à-dire : t1 = $t_{déb}$ - $\delta$1), et/ou le second instant de référence t2 est choisi strictement postérieur à l'instant de fin de pic (t2 > $t_{fin}$), ledit second instant de référence suivant ledit instant de fin de pic d'une valeur de retard 62 (c'est-à-dire : t2 = $t_{fin}$ + $\delta$2).

A titre indicatif, la valeur d'avance 61 est de préférence comprise entre 20 ms et 100 ms, et par exemple sensiblement égale à 50 ms (cinquante millisecondes).

A titre indicatif, la valeur de retard 62 est de préférence comprise entre 20 ms et 100 ms, et par exemple sensiblement égale à 50 ms (cinquante millisecondes).

En d'autres termes, on élargit de préférence l'intervalle temporel [t1 ; t2] sur lequel on calcule la hauteur de chute $\Delta C_{action}$ du signal considéré (ici le signal d'effort d'actionnement), et ce préférentiellement des deux côtés, aussi bien en retard qu'en avance.

Cet élargissement de l'intervalle de mesure par rapport à l'intervalle brut défini par les instants de début et de fin de pic, élargissement qui représente de préférence au moins 10 ms (en avance aussi bien qu'en retard), et par exemple préférentiel 50 ms (en avance aussi bien qu'en retard : $\delta$1 = $\delta$2 = 50 ms), permet de s'assurer que la durée écoulée (c'est-à-dire t2-t1) entre le premier instant de référence t1 et le second instant de référence t2 est effectivement supérieure ou égale (et le cas échéant tout juste supérieure) à la durée effective de la chute (complète) du signal imputable à l'inversion de braquage, et donc imputable au frottement.

Ainsi, le procédé conforme à l'invention permet de garantir que l'on mesure bien les valeurs extrêmes du signal d'effort d'actionnement qui correspondent à l'intégralité de la hauteur de chute dudit signal, caractéristique de l'inversion de braquage, sans tronquer une partie de ladite chute.

En outre, les valeurs d'avance $\delta$1 et de retard $\delta$2 restent toutefois relativement inférieures à des seuils d'élargissement maximal prédéterminés, choisis de telle sorte que le premier instant de référence t1 et le second instant de référence t2 restent au voisinage temporel immédiat du domaine de la transition (du domaine de la chute) due à l'inversion de braquage, dans des domaines "frontaliers" de ladite transition, domaines frontaliers dans lesquels la valeur du signal concerné reste quasiment constante par rapport à la valeur qui est prise par ledit signal en limite de transition (les évolutions de ladite valeur dans les domaines frontaliers étant par exemple contenues dans une plage d'amplitude inférieure ou égale à 10 %, à 5 %, voire inférieure ou égale à 1 % de la hauteur de chute).

Ici, du fait que, en dehors du domaine de la chute imputable à l'inversion du frottement, le signal de couple moteur $C_{Mot}$, ainsi que le signal d'effort d'actionnement $C_{action}$, varient bien plus lentement que pendant ladite chute, le faible élargissement proposé (l'avance $\delta 1$ et le retard $\delta 2$ étant typiquement inférieurs à 200 ms, voire à 100 ms, et de préférence égaux chacun à 50 ms) permet de maintenir le premier instant de référence t1 et le second instant de référence t2 au voisinage temporel immédiat du domaine de la chute, dans des domaines "frontaliers" de ladite chute, domaines frontaliers dans lesquels la valeur du signal concerné reste quasiment constante par rapport à la valeur qui est prise par ledit signal en limite de chute.

Ainsi, les mesures des valeurs du signal prises au premier et au second instant de référence t1, t2, c'est-à-dire ni trop tôt, ni trop tard par rapport à la chute imputable au frottement, reflètent fidèlement la valeur réelle de l'effort d'actionnement $C_{action}$ (ou, respectivement de couple moteur $C_{Mot}$) considéré aux limites de ladite chute.

En définitive, le procédé selon l'invention permet donc de mesurer sensiblement une hauteur de chute qui correspond à toute la contribution propre au frottement et rien qu'à la contribution propre au frottement.

Ledit procédé permet donc avantageusement d'obtenir, quasiment en temps réel, une mesure fiable, précise et régulièrement mise à jour, du frottement F véritable qui affecte la direction à l'instant considéré, ce que ne permettaient pas les procédés connus, qui reposaient sur une approximation assez grossière du frottement, réalisée à partir de modèles de frottement théoriques préétablis.

On notera que, selon une variante de mise en œuvre de l'invention, on pourrait, au lieu de calculer le premier et le second instant de référence t1, t2 respectivement à partir de l'instant de début de pic $t_{déb}$ et de l'instant de fin de pic $t_{fin}$, caractériser le pic de dérivée 7 par un instant de pic unique, correspondant par exemple à l'instant de début du pic, à l'instant de fin de pic, ou à l'instant moyen situé au milieu desdits instants de début et de fin de pic, puis fixer arbitrairement les premier et second instants t1, t2 de référence de part et d'autre dudit instant de pic unique, de manière à englober dans l'intervalle ainsi défini la durée caractéristique prévisible des chutes de signal ; par exemple, on pourrait considérer que le premier instant de référence est situé 100 ms avant l'instant de pic unique, et le second instant 200 ms après ledit instant de pic unique.

Bien entendu, ce choix des instants de référence t1, t2 n'affecte nullement le principe général d'évaluation du frottement décrit plus haut.

Quelle que soit du reste la définition retenue pour le premier et le second instant de référence t1, t2, la période d'enregistrement du signal d'effort d'actionnement $C_{action}$ (et/ou du signal de couple moteur $C_{Mot}$), qui permet de garder provisoirement en mémoire les valeurs dudit signal utiles à l'évaluation du frottement à l'instant considéré, sera bien entendue supérieure à la largeur de l'intervalle temporel [t1; t2] compris entre lesdits premier et second instants de référence, et, plus particulièrement, supérieure à la durée maximale prévisible de chute majorée du retard $\delta 2$ et de l'avance 61.

Par ailleurs, le procédé selon l'invention comprend de préférence une étape (c) de vérification, au cours de la quelle on vérifie, de préférence de manière cumulative, ici au sein d'un module de vérification 12 sur la figure 4, la réalisation d'une ou plusieurs conditions de mise en œuvre parmi les conditions suivantes : la vitesse de rotation du volant de conduite $\dot{\theta}_{volant}$ est inférieure ou égale à un seuil de vitesse de volant $\dot{\theta}_{volant\ seuil}$ prédéterminé, l'accélération angulaire du volant de conduite $\ddot{\theta}_{volant}$ est inférieure ou égale à un seuil d'accélération de volant $\ddot{\theta}_{volant\ seuil}$ prédéterminé, l'évolution de la vitesse de lacet $\psi$ du véhicule ou de l'accélération latérale $\gamma$ du véhicule en fonction de l'angle d'orientation du volant de conduite $\theta_{volant}$ se trouve dans un domaine sensiblement linéaire.

La condition portant sur la vitesse de rotation du volant de conduite $\dot{\theta}_{volant}$, qui doit être inférieure ou égale à un seuil de vitesse de volant $\dot{\theta}_{volant\ seuil}$ proche de zéro, et par exemple de l'ordre de 5 deg/s, permet de vérifier que la situation de vie du véhicule est compatible avec une inversion de braquage, en s'assurant que la vitesse angulaire du volant se trouve au voisinage de zéro au moment de l'inversion de braquage présumée.

En effet, lors d'une inversion de braquage effective, la vitesse volant s'annule nécessairement au point d'inversion (point de rebroussement) du volant. A l'inverse, l'absence de passage par zéro de la vitesse du volant exclut que l'on se trouve en situation d'inversion de braquage.

La condition portant sur l'accélération angulaire du volant permet quant à elle de procéder à l'évaluation du frottement uniquement lorsque l'accélération du volant, et donc l'accélération des mouvements des organes du mécanisme de direction, est faible, par exemple inférieure ou égale à 100 deg/s$^2$, c'est-à-dire uniquement lorsque les efforts inertiels sont inexistants ou négligeables.

On s'assure ainsi que, lors de l'évaluation du frottement, l'état de contrainte du mécanisme de direction, tel que cet état de contrainte est perçu et quantifié par la mesure du couple moteur $C_{Mot}$ et/ou par la mesure de l'effort d'actionnement $C_{action}$, est bien représentatif du phénomène de frottement, et uniquement du phénomène de frottement, et n'est pas faussé par l'apparition d'efforts inertiels.

La condition sur la linéarité de l'évolution de la vitesse de lacet $\psi$ du véhicule, ou, de manière équivalente, de l'évolution de l'accélération latérale $\gamma$ du véhicule, en fonction de l'angle d'orientation du volant de conduite $\theta_{volant}$ revient à s'assurer que le véhicule n'est pas en situation de perte d'adhérence, et plus particulièrement ni en survirage, ni en sous-virage.

En effet, une perte d'adhérence (des pneumatiques sur la chaussée) va provoquer une baisse de l'effort résistant que les roues et les biellettes de direction exercent sur la crémaillère, à l'encontre du moteur d'assistance, ce qui va par conséquent entraîner une baisse correspondante de l'effort délivré par le moteur d'assistance, baisse qui sera sans rapport avec l'action des frottements F internes, et pourrait donc fausser l'évaluation desdits frottements F.

Pour vérifier la condition de linéarité, on pourra notamment utiliser des lois empiriques établies lors de campagnes d'essais et associant, pour différentes situations de vie (temps sec, chaussée humide, etc.), et à chaque position angulaire du volant parmi une pluralité de positions angulaire du volant différentes prédéterminées, une vitesse de lacet ou une accélération maximale admissible correspondante.

On considérera alors qu'on se trouve dans le domaine de linéarité, c'est-à-dire dans une situation de vie autorisant une évaluation fiable du frottement, si, pour la position angulaire de volant (ou, de manière équivalente, la position angulaire de l'arbre du moteur d'assistance) mesurée à l'instant considéré, la vitesse de lacet $\dot{\psi}$ ou l'accélération latérale $\gamma$ du véhicule (qui peuvent être par exemple fournies par le système de contrôle de trajectoire ESP, ou par le système d'assistance au freinage ABS), est inférieure à la valeur maximale admissible.

En définitive, la réalisation effective de l'évaluation du frottement selon l'invention peut avantageusement être subordonnée à la réalisation simultanée de plusieurs conditions, en l'espèce par exemple jusqu'à quatre conditions (ou davantage), à savoir une condition portant sur la durée minimale de maintien du pic de dérivée $d_{pic}$, une condition portant sur la vitesse angulaire du volant $\dot{\theta}_{volant}$, une condition portant sur l'accélération angulaire du volant $\ddot{\theta}_{volant}$, et/ou une condition portant sur la linéarité de la dynamique latérale (vitesse de lacet $\dot{\psi}$, ou accélération latérale $\gamma$).

A l'inverse, l'absence de réalisation de l'une de ces conditions pourra inhiber l'évaluation du frottement, jugée alors non pertinente au regard de la situation de vie du véhicule à l'instant considéré.

Une telle redondance de vérifications permet d'exclure les cas douteux, et ainsi de ne conserver que les évaluations fiables du frottement, ce qui améliore significativement la robustesse du procédé conforme à l'invention au regard des différentes instabilités qui pourraient l'affecter.

Par ailleurs, le seuil de variation $S_{pic}$ et/ou, s'il y a lieu, le seuil de durée minimale $d_0$ de maintien de pic et/ou les valeurs d'avance $\delta 1$ et de retard $\delta 2$, sont de préférence ajustés en fonction de l'accélération angulaire $\ddot{\theta}_{volant}$ du volant de conduite.

En d'autres termes, l'invention permet d'actualiser, de façon dynamique, le paramétrage utilisé pour la détection des inversions de braquage et/ou l'évaluation du frottement, en fonction de différents paramètres tels que l'accélération angulaire $\ddot{\theta}_{volant}$ du volant de conduite, et ce afin d'optimiser au cas par cas la fiabilité et la réactivité du procédé.

En effet, on comprendra aisément, par exemple, que la durée de chute du signal de couple moteur $C_{Mot}$ (respectivement du signal d'effort d'actionnement $C_{action}$) est d'autant plus courte, et sa pente (sa dérivée temporelle) d'autant plus élevée, que la manœuvre du volant est rapide.

Ainsi, par exemple, lorsque le conducteur exécute rapidement une manœuvre de braquage immédiatement suivie d'une manœuvre de contrebraquage, de telle sorte que les accélérations angulaires du volant de conduite mises en œuvre de part et d'autre du point de vitesse nulle correspondant à l'inversion de braquage sont relativement élevées, il est possible d'augmenter la valeur du seuil de variation Spic, afin de mieux éliminer le bruit, tout en conservant la possibilité de détecter une chute possédant une forte pente.

De manière alternative ou complémentaire, il est également envisageable, voire souhaitable lorsque l'accélération angulaire du volant augmente, de réduire le seuil de durée minimale de maintien de pic $d_0$, afin de ne pas risquer d'exclure un pic relativement court mais néanmoins représentatif d'une inversion de braquage.

De même, de manière alternative ou complémentaire, il est également envisageable de réduire en pareille situation les valeurs d'avance $\delta 1$ et/ou de retard $\delta 2$ utilisées pour définir les premier et second instants de référence t1, t2, auxquels sont acquises les valeurs extrêmes de l'effort d'actionnement $C_{action}$ permettant d'estimer la hauteur de chute $C_{action}$.

En effet, la durée de chute se raccourcissant lorsque la manœuvre du volant est plus rapide, il est possible d'encadrer la totalité de la chute dans un domaine temporel plus étroit, sans risquer de tronquer la hauteur de chute.

Avantageusement, la réduction du seuil de durée minimale de maintien de pic $d_0$ et/ou des valeurs d'avance $\delta 1$ et/ou de retard $\delta 2$ permet d'accélérer l'exécution du procédé, et ainsi d'optimiser sa réactivité, sans nuire à sa fiabilité.

Plus globalement, l'adaptation, en temps réel, de la détection des inversions de braquage et/ou de l'évaluation du frottement en fonction de la situation de vie du véhicule et/ou de la dynamique du volant de conduite permet d'optimiser les performances du procédé, et de rendre ce dernier particulièrement polyvalent.

Bien entendu, l'invention concerne également en tant que tel un module de gestion de direction assistée qui est structuré ou programmé pour mettre en œuvre un procédé selon l'une ou l'autre des caractéristiques et variantes décrites dans ce qui précède.

Ledit module de gestion pourra notamment comprendre, et plus particulièrement regrouper, le cas échéant au sein d'un même boîtier, l'un et/ou l'autre (et le cas échéant l'ensemble) des modules d'application de loi d'assistance 3, de dérivation 6, de filtrage 9, d'évaluation de frottement 11, et de vérification 12 décrits dans ce qui précède.

Chacun des modules susmentionnés pourra être formé par un circuit électronique, une carte électronique, un calculateur (ordinateur), un automate programmable, ou tout autre dispositif équivalent.

Chacun des modules susmentionnés pourra présenter une structure de commande physique, liée au câblage de ses composants électroniques, et/ou, de préférence, une structure de commande virtuelle, définie par une programmation informatique.

Bien entendu, l'invention concerne également en tant que tel tout support de données lisible par un ordinateur et contenant des éléments de code de programme informatique permettant d'exécuter le procédé conforme à l'invention lorsque ledit support est lu par un ordinateur.

On notera enfin que le procédé conforme à l'invention, qui exploite des signaux généralement disponibles au sein des directions assistée, peut être facilement généralisé à toutes les directions assistées, y compris en rattrapage sur de nombreuses directions assistées déjà existantes, par une simple reprogrammation de leur calculateur.

Bien entendu, l'invention n'est par ailleurs nullement limitée aux seules variantes de réalisation décrites dans ce qui précède.

## Revendications

1. Procédé de gestion d'une direction assistée (1), ladite direction assistée comprenant au moins un moteur d'assistance (2) destiné à délivrer un effort d'assistance ($C_{assist}$), ledit procédé comprenant une étape (a) de détection d'inversion de braquage au cours de laquelle on acquiert un signal, dit « signal de couple moteur » ($C_{Mot}$), qui est représentatif de l'effort d'assistance ($C_{asist}$) délivré par le moteur d'assistance (2), puis l'on évalue la dérivée temporelle $(\frac{\partial C_{Mot}}{\partial t})$ dudit signal de couple moteur, puis l'on compare ladite dérivée temporelle du signal de couple moteur à un seuil de variation ($S_{pic}$) prédéterminé afin de détecter un pic de dérivée (7), supérieur audit seuil de variation ($S_{pic}$) prédéterminé, qui signale une inversion (4) du sens de braquage de la direction, **caractérisé en ce que** au cours de l'étape (a) de détection d'inversion de braquage, on réalise un filtrage sélectif de pic en chronométrant la durée ($d_{pic}$), dite « durée de maintien de pic », pendant laquelle la dérivée temporelle du signal de couple moteur $(\frac{\partial C_{Mot}}{\partial t})$ se maintient au-dessus du seuil de variation ($S_{pic}$), après avoir franchi ledit seuil de variation ($S_{pic}$), et en signalant une inversion de braquage (4) si la durée de maintien de pic ($d_{pic}$) est supérieure ou égale à un seuil de durée minimale ($d_0$) prédéterminé.

2. Procédé selon la revendication 1 **caractérisé en ce que** le signal de couple moteur utilisé pour l'étape (a) de détection d'inversion de braquage est constitué par la consigne d'effort ou de couple ($C_{Mot}$) qui est appliquée au moteur d'assistance (2), ou bien encore par une valeur mesurée de l'effort ou du couple ($C_{assist}$) qui est effectivement restitué par le moteur d'assistance (2).

3. Procédé selon l'une des revendications précédentes **caractérisé en ce qu'**il comprend une étape (b) d'évaluation de frottement au cours de laquelle on acquiert un signal ($C_{action}$), dit « signal d'effort d'actionnement », qui est représentatif de l'effort d'actionnement total exercé conjointement sur la direction assistée par le conducteur et par le moteur d'assistance (2), et l'on évalue l'effort de frottement (F) qui s'oppose aux mouvements de braquage de la direction assistée à partir de la différence ($\Delta C_{action}$) entre deux valeurs prises par ledit signal d'effort d'actionnement ($C_{action}$) respectivement avant et après l'inversion de braquage (4).

4. Procédé selon la revendication 3, **caractérisé en ce que** le signal d'effort d'actionnement ($C_{action}$) est formé par la somme d'une part d'un signal de couple volant représentatif du couple volant ($C_{volant}$) exercé par le conducteur sur le volant de conduite, et d'autre part du signal de couple moteur ($C_{Mot}$).

5. Procédé selon la revendication 3 ou 4, **caractérisé en ce que**, au cours de l'étape (b) d'évaluation de frottement, on identifie un instant de début de pic ($t_{déb}$) qui correspond à l'instant auquel la dérivée temporelle du signal de couple moteur $(\frac{\partial C_{Mot}}{\partial t})$ passe au-dessus du seuil de variation ($S_{pic}$), on identifie un instant de fin de pic ($t_{fin}$) qui correspond à l'instant auquel la dérivée temporelle du signal de couple moteur $(\frac{\partial C_{Mot}}{\partial t})$ redescend en-dessous dudit seuil de variation ($S_{pic}$), puis on détermine quelle était la valeur ($C_{action}(t1)$), dite « valeur d'effort d'actionnement antérieure à l'inversion de braquage », prise par le signal d'effort d'actionnement à un premier instant de référence (t1) égal ou antérieur à l'instant de début de pic ($t_{déb}$), on détermine quelle était la valeur ($C_{action}(t2)$), dite « valeur d'effort d'actionnement postérieure à l'inversion de braquage », prise par le signal d'effort d'actionnement à un second instant de référence (t2) égal ou postérieur à l'instant de fin de pic ($t_{fin}$), puis l'on évalue le frottement (F) à partir du calcul de la différence ($\Delta C_{action}$) entre la valeur d'effort d'actionnement postérieure à l'inversion de braquage ($C_{action}$(t2)) et la valeur d'effort d'actionnement antérieure à l'inversion de braquage ($C_{action}$(t1)).

6. Procédé selon la revendication 5, **caractérisé en ce que** le premier instant de référence (t1) est choisi strictement antérieur à l'instant de début de pic ($t_{déb}$), ledit premier instant de référence précédant ledit instant de début de pic d'une valeur d'avance ($\delta1$) qui est de préférence comprise entre 20 ms et 100 ms, et par exemple sensiblement égale à 50 ms, et/ou **en ce que** le second instant de référence (t2) est choisi strictement postérieur à l'instant de fin de pic ($t_{fin}$), ledit second instant de référence suivant ledit instant de fin de pic d'une valeur de retard ($\delta2$) qui est de préférence comprise entre 20 ms et 100 ms, et par exemple sensiblement égale à 50 ms.

7. Procédé selon l'une des revendications précédentes **caractérisé en ce qu'**il comprend une étape (c) de vérification, au cours de la quelle on vérifie, de préférence de manière cumulative, la réalisation d'une ou plusieurs conditions de mise en œuvre parmi les conditions suivantes : la vitesse de rotation du volant de conduite ($\dot{\theta}_{volant}$) est inférieure ou égale à un seuil de vitesse de volant prédéterminé, l'accélération angulaire du volant de conduite ($\ddot{\theta}_{volant}$) est inférieure ou égale à un seuil d'accélération de volant prédéterminé, l'évolution de la vitesse de lacet ($\dot{\psi}$) du véhicule ou de l'accélération latérale du véhicule ($\gamma$) en fonction de l'angle d'orientation du volant de conduite ($\theta_{volant}$) se trouve dans un domaine sensiblement linéaire.

8. Procédé selon l'une des revendications précédentes **caractérisé en ce que** le seuil de variation ($S_{pic}$) et/ou, s'il y a lieu, le seuil de durée minimale ($d_0$) de maintien de pic et/ou les valeurs d'avance ($\delta1$) et de retard ($\delta2$), sont ajustés en fonction l'accélération angulaire $\ddot{\theta}_{volant}$ du volant de conduite.

9. Module de gestion de direction assistée structuré ou programmé pour mettre en œuvre un procédé selon l'une des revendications 1 à 8.

**Patentansprüche**

1. Verfahren zur Verwaltung einer Servolenkung (1), wobei die Servolenkung mindestens einen Hilfsmotor (2) umfasst, der dazu bestimmt ist, eine Hilfskraft ($C_{assist}$) zu liefern, wobei das Verfahren einen Schritt (a) zum Erfassen der Einschlagumkehrung umfasst, in dessen Verlauf ein Signal, "Motordrehmomentsignal" ($C_{Mot}$) genannt, aufgezeichnet wird, das für die Hilfskraft ($C_{assist}$) repräsentativ ist, die von dem Hilfsmotor (2) geliefert wird, dann die zeitliche Ableitung

$$\left(\frac{\partial C_{Mot}}{\partial t}\right)$$

des Motordrehmomentsignals bewertet wird, dann die zeitliche Ableitung des Motordrehmomentsignals mit einem vorbestimmten Variationsschwellenwert ($S_{pic}$) verglichen wird, um eine Ableitungsspitze (7) zu erfassen, die größer ist als der Variationsschwellenwert ($S_{pic}$), der eine Umkehrung (4) der Einschlagrichtung der Lenkung meldet, **dadurch gekennzeichnet, dass** im Laufe des Schritts (a) zum Erfassen einer Einschlagumkehrung ein selektives Spitzenfiltern ausgeführt wird, indem die Dauer ($d_{pic}$), "Spitzenhaltedauer" genannt, zeitgemessen wird, während der sich die zeitliche Ableitung des Motordrehmoments

$$\left(\frac{\partial C_{Mot}}{\partial t}\right)$$

oberhalb des Variationsschwellenwerts ($S_{pic}$) hält, nachdem der Variationsschwellenwert ($S_{pic}$) überschritten wurde, und indem eine Einschlagumkehrung (4) gemeldet wird, falls die Spitzenhalterdauer ($d_{pic}$) größer oder gleich ist wie ein Schwellenwert mit vorbestimmter Mindestdauer ($d_0$).

2. Verfahren nach Anspruch 1, **dadurch gekennzeichnet, dass** das Motordrehmomentsignal für den Schritt (a) zum Erfassen der Einschlagumkehrung aus dem Kraft- oder Drehmomentsollwert ($C_{Mot}$) besteht, der an den Hilfsmotor (2) angelegt wird, oder auch aus einem Messwert der Kraft oder des Drehmoments ($C_{assist}$), der effektiv von dem Hilfsmotor (2) wiedergegeben wird.

3. Verfahren nach einem der vorstehenden Ansprüche, **dadurch gekennzeichnet, dass** es einen Schritt (b) zum Bewerten von Reibung umfasst, in dessen Verlauf ein Signal ($C_{action}$), "Betätigungskraftsignal" genannt, aufgenommen wird, das für die Gesamtbetätigungskraft repräsentativ ist, die gemeinsam auf die Servolenkung von dem Fahrer und von dem Hilfsmotor (2) ausgeübt wird, und die Reibungskraft (F), die sich den Einschlagbewegungen der Servolenkung widersetzt, ausgehend von dem Unterschied ($\Delta C_{action}$) zwischen zwei Werten, die das Betätigungskraftsignal ($C_{action}$) jeweils vor und nach der Einschlagumkehrung (4) annimmt, bewertet wird.

4. Verfahren nach Anspruch 3, **dadurch gekennzeichnet, dass** das Betätigungskraftsignal

($C_{action}$) aus der Summe einerseits eines Lenkraddrehmomentsignals, das für das Lenkraddrehmoment ($C_{volant}$) repräsentativ ist, das von dem Fahrer auf das Fahrlenkrad ausgeübt wird, und andererseits aus dem Motordrehmomentsignal ($C_{Mot}$) gebildet wird.

5. Verfahren nach Anspruch 3 oder 4, **dadurch gekennzeichnet, dass** im Laufe des Reibungsbewertungsschritts (b) ein Spitzenanfangsaugenblick ($t_{déb}$) definiert wird, der dem Augenblick entspricht, in dem die zeitliche Ableitung des Motordrehmomentsignals $\left(\dfrac{\partial C_{Mot}}{\partial t}\right)$ über den Variationsschwellenwert ($S_{pic}$) steigt, ein Spitzenendaugenblick ($t_{fin}$) identifiziert wird, der dem Augenblick entspricht, in dem die zeitliche Ableitung des Motordrehmomentsignals $\left(\dfrac{\partial C_{Mot}}{\partial t}\right)$ wieder unter den Variationsschwellenwert ($S_{pic}$) sinkt, dann bestimmt wird, welcher der Wert ($C_{action}(t1)$), "Betätigungskraftwert vor der Einschlagumkehrung" genannt, war, den das Betätigungskraftsignal in einem ersten Referenzaugenblick (t1) gleich oder vor dem Spitzenanfangsaugenblick ($t_{déb}$) angenommen hat, bestimmt wird, welcher der Wert ($C_{action}(t2)$), "Betätigungskraftwert nach der Einschlagumkehrung" genannt, war, den das Betätigungskraftsignal in einem zweiten Referenzaugenblick (t2) gleich oder nach dem Spitzenendaugenblick ($t_{fin}$) angenommen hat, dann die Reibung (F) ausgehend von der Berechnung des Unterschieds ($\Delta C_{action}$) zwischen dem Betätigungskraftwert nach der Einschlagumkehrung ($C_{action}(t2)$) und dem Betätigungskraftwert vor der Einschlagumkehrung ($C_{action}(t1)$) bewertet wird.

6. Verfahren nach Anspruch 5, **dadurch gekennzeichnet, dass** der erste Referenzaugenblick (t1) strikt vor dem Spitzenanfangsaugenblick ($t_{déb}$) ausgewählt wird, wobei der erste Referenzaugenblick dem Spitzenanfangsaugenblick um einen Vorlaufwert ($\delta 1$) vorausgeht, der vorzugsweise zwischen 20 ms und 100 ms liegt und zum Beispiel im Wesentlichen gleich 50 ms ist, und/oder, dass der zweite Referenzaugenblick (t2) strikt nach dem Spitzenendaugenblick ($t_{fin}$) ausgewählt wird, wobei der zweite Referenzaugenblick dem Spitzenendaugenblick mit einem Verzögerungswert ($\delta 2$) folgt, der vorzugsweise zwischen 20 ms und 100 ms liegt, und zum Beispiel im Wesentlichen gleich 50 ms beträgt.

7. Verfahren nach einem der vorstehenden Ansprüche, **dadurch gekennzeichnet, dass** es einen Prüfschritt (c) umfasst, in dessen Verlauf bevorzugt kumulativ die Realisierung einer oder mehrerer Umsetzungsbedingungen der folgenden Bedingungen geprüft wird: die Drehzahl des Fahrlenkrads ($\dot{\theta}_{volant}$) ist kleiner oder gleich einem vorbestimmten Lenkraddrehzahlschwellenwert, die Winkelbeschleunigung des Fahrlenkrads ($\ddot{\theta}_{volant}$) ist kleiner oder gleich einem vorbestimmten Lenkradbeschleunigungsschwellenwert, die Entwicklung der Giergeschwindigkeit ($\dot{\psi}$) des Fahrzeugs oder der Seitenbeschleunigung des Fahrzeugs (y) in Abhängigkeit von dem Fahrlenkradausrichtungswinkel ($\theta_{volant}$) liegt in einem im Wesentlichen linearen Bereich.

8. Verfahren nach einem der vorstehenden Ansprüche, **dadurch gekennzeichnet, dass** der Variationsschwellenwert ($S_{pic}$) und/oder, gegebenenfalls, der Mindestdauerschwellenwert ($d_0$) zum Spitzenhalten und/oder der Vorlaufwert ($\delta 1$) und der Verzögerungswert ($\delta 2$) in Abhängigkeit von der Winkelbeschleunigung ($\ddot{\theta}_{volant}$) des Fahrlenkrads eingestellt werden.

9. Servolenkungsverwaltungsmodul, das strukturiert oder programmiert ist, um ein Verfahren nach einem der Ansprüche 1 bis 8 umzusetzen.

**Claims**

1. A method for managing a power steering (1), said power steering comprising at least one assist motor (2) intended for outputting an assistance force ($C_{assist}$), said method comprises a step (a) for detecting a steering reversal comprising acquiring a signal, called « motor torque signal » ($C_{mot}$), which is representative of the assistance force ($C_{assist}$) output by the assist motor (2), and then evaluating the time derivative $\left(\dfrac{\partial CMot}{\partial t}\right)$ of said motor torque signal, then comparing said time derivative of the motor torque signal to a predetermined variation threshold ($S_{peak}$) for detecting a derivative peak (7) greater than said predetermined variation threshold ($S_{peak}$), which indicates a reversal (4) of the steering direction of the power steering, said method being **characterized in that** during the steering reversal detection step (a), a selective peak filter is carried out by timing the duration ($d_{peak}$), called « peak holding duration », during which the time derivative of the motor torque signal $\left(\dfrac{\partial CMot}{\partial t}\right)$ is held above the variation threshold ($S_{peak}$), after having crossed said variation threshold ($S_{peak}$), and by indicating a steering reversal (4) if the peak holding duration

($d_{peak}$) is greater than or equal to a predetermined minimum duration threshold ($d_0$).

2. The method according to claim 1 **characterized in that** the motor torque signal used for the steering reversal detection step (a) consists of the force or torque setpoint ($C_{Mot}$) which is applied to the assist motor (2), or even by a measured value of the force or the torque ($C_{assist}$) which is actually reproduced by the assist motor (2).

3. The method according to any of the preceding claims, **characterized in that** it comprises a friction evaluation step (b) comprising acquiring a signal ($C_{action}$) called « actuation force signal » which is representative of the total actuation force jointly exerted on the power steering by the driver and by the assist motor (2), and evaluating the friction force (F) which opposes the steering movements of the power steering from the difference ($\Delta C_{action}$) between two values taken by said actuation force signal ($C_{action}$) respectively before and after the steering reversal (4).

4. The method according to claim 3 **characterized in that** the actuation force signal ($C_{action}$) is formed by the sum, on the one hand, of a steering wheel torque signal representative of the steering wheel torque ($C_{steering\ wheel}$) exerted by the driver on the steering wheel, and on the other hand, of the motor torque signal ($C_{Mot}$).

5. The method according to claim 3 or 4 **characterized in that** the friction evaluation step (b) comprises evaluating a peak start instant ($t_{start}$) which corresponds to the instant at which the time derivative $\left(\dfrac{\partial CMot}{\partial t}\right)$ of the motor torque signal passes over the variation threshold ($S_{peak}$), then determining what was the value ($C_{action}$(t1)), called « actuation force value prior to the steering reversal », taken by the actuation force signal at a first reference instant (t1) equal to or prior to the peak start instant (tstart), determining what was the value ($C_{action}$(t2)), called « actuation force value subsequent to the steering reversal », taken by the actuation force signal at a second reference instant (t2) equal to or subsequent to the peak end instant (tend), and then evaluating the friction (F) from calculating the difference ($\Delta C_{action}$) between the actuation force value subsequent to the steering reversal ($C_{action}$(t2)) and the actuation force value prior to the steering reversal ($C_{action}$(t1)).

6. The method according to claim 5 **characterized in that** the first reference instant (t1) is selected strictly prior to the peak start instant ($t_{start}$), said first reference instant preceding said peak start instant by an advance value ($\delta 1$) which is preferably comprised between 20 ms and 100 ms, and for example substantially equal to 50 ms, and/or **in that** the second reference instant (t2) is selected strictly subsequent to the peak end instant (tend), said second reference instant following said peak end instant by a delay value ($\delta 2$) which is preferably comprised between 20 ms and 100 ms, and for example substantially equal to 50 ms.

7. The method according to any of the preceding claims, **characterized in that** it comprises a verification step (c), during which one checks whether one or more implementation conditions among the following conditions are satisfied, preferably in a cumulative manner: the rotation speed of the steering wheel ($\dot{\theta}_{steering\ wheel}$) is lower than or equal to a predetermined steering wheel speed threshold, the angular acceleration ($\ddot{\theta}_{steering\ wheel}$) of the steering wheel is lower than or equal to a predetermined steering wheel acceleration threshold, the evolution of the yaw rate ($\dot{\psi}$) of the vehicle or the evolution of the lateral acceleration of the vehicle (y) as a function of the orientation angle of the steering wheel ($\theta_{steering\ wheel}$) lies within a substantially linear domain.

8. The method according to any of the preceding claims, **characterized in that** the variation threshold ($S_{peak}$) and/or, if appropriate, the minimum peak holding duration threshold ($d_0$) and/or the advance ($\delta 1$) and delay ($\delta 2$) values are adjusted depending on the angular acceleration $\ddot{\theta}_{steering\ wheel}$ of the steering wheel.

9. A structured or programmed power steering management module for implementing a method according to any of claims 1 to 8.

Fig. 1

Fig. 2

Fig. 3

Fig. 4